(19) Europäisches Patentamt
European Patent Office
Office européen des brevets

(11) **EP 4 597 012 A1**

(12) **EUROPEAN PATENT APPLICATION**
published in accordance with Art. 153(4) EPC

(43) Date of publication:
06.08.2025 Bulletin 2025/32

(21) Application number: 23911722.9

(22) Date of filing: 13.12.2023

(51) International Patent Classification (IPC):
*F25D 29/00* (2006.01)      *B65G 61/00* (2006.01)
*F25D 11/00* (2006.01)      *G08B 21/18* (2006.01)

(52) Cooperative Patent Classification (CPC):
B65D 90/48; B65G 61/00; F25D 11/00; F25D 29/00;
G01P 15/00; G08B 21/18

(86) International application number:
PCT/JP2023/044657

(87) International publication number:
WO 2024/142941 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 JP 2022211370

(71) Applicant: DAIKIN INDUSTRIES, LTD.
Osaka-shi, Osaka 530-0001 (JP)

(72) Inventors:
• NISHIYAMA Kota
Osaka-shi, Osaka 530-0001 (JP)
• IKEMIYA Makoto
Osaka-shi, Osaka 530-0001 (JP)

(74) Representative: Hoffmann Eitle
Patent- und Rechtsanwälte PartmbB
Arabellastraße 30
81925 München (DE)

(54) **DETERMINATION DEVICE, REFRIGERATION DEVICE FOR CONTAINERS, CONTAINER, DETERMINATION SYSTEM, DETERMINATION METHOD, AND PROGRAM**

(57)     A determination device (80) includes: a storage (81) configured to store data on an influence on a detected value of a degree of impact detected by a sensor (65) disposed in a container (10) including a target component (T), where the influence is due to a difference between a position of the sensor (65) and a position of the target component (T); and a processor (82) configured to determine a degree of impact on the target component (T) as an estimated value based on the detected value detected by the sensor (65) and the data stored in the storage (81).

FIG.4

**Description**

TECHNICAL FIELD

The present disclosure relates to a determination device, a container refrigeration apparatus, a container, a determination system, a determination method, and a program.

BACKGROUND ART

A traditional container that includes a container body for marine transportation or land transportation and a container refrigeration apparatus for cooling the inside of the container body is known. Patent Document 1 discloses a container refrigeration apparatus including: a detection unit that detects a physical quantity to determine whether a strong impact has been applied on the container; and a determination unit that determines whether the container refrigeration apparatus is in an unusual state based on that physical quantity. Patent Document 1 discloses using an impact sensor as a detection unit that is provided in the container refrigeration apparatus and is configured to detect the acceleration.

CITATION LIST

PATENT DOCUMENT

Patent Document 1: Japanese Unexamined Patent Publication No. 2020-101327

SUMMARY OF THE INVENTION

TECHNICAL PROBLEMS

However, according to the traditional method, it is impossible to accurately detect the degree of impact on a target component because of the influence due to the difference between the position of the sensor and the position of the target component of the container.
An object of the present disclosure is to provide a determination device where it is possible to accurately determine the degree of impact on a target component even if the target component and a sensor are provided at different positions in a container.

SOLUTION TO THE PROBLEMS

A first aspect is directed to a determination device including: a storage (81) configured to store data on an influence on a detected value of a degree of impact detected by a sensor (65) disposed in a container (10) including a target component (T), where the influence is due to a difference between a position of the sensor (65) and a position of the target component (T); and a processor (82) configured to determine a degree of impact on the target component (T) as an estimated value based on the detected value detected by the sensor (65) and the data stored in the storage (81).
In the first aspect, the sensor (65) is disposed on the container (10). The sensor (65) detects an index of the degree of impact. The storage (81) stores the data on the influence due to the difference between the position of the sensor (65) and the position of the target component (T). The processor (82) estimates the degree of impact on the target component (T) based on the detected value detected by the sensor (65) and the data stored in the storage (81). Accordingly, the processor (82) can determine the degree of impact on the target component (T) as an estimated value with a smaller error caused by the influence due to the difference between the position of the sensor (65) and the position of the target component. As a result, it is possible to accurately determine the degree of impact on the target component (T) even if the target component (T) and the sensor (65) are provided at different positions.
A second aspect is an embodiment of the first aspect. In the second aspect, if the estimated value exceeds a first threshold, the processor (82) determines that the target component (T) is in an unusual state.
In the second aspect, if the estimated value exceeds the first threshold, the processor (82) determines that the target component (T) is in an unusual state. Accordingly, it is possible to determine an unusual state that is caused by a relatively large impact being applied on the container (10).
A third aspect is an embodiment of the first or second aspect. In the third aspect, if the number of times the estimated value exceeds a second threshold exceeds a predetermined number of times, the processor (82) determines that the target component (T) is in an unusual state.
In the third aspect, if the number of times the estimated value exceeds the second threshold exceeds a predetermined number of times, the processor (82) determines that the target component (T) is in an unusual state.

Accordingly, it is possible to determine an unusual state that is caused by some degree of impact being repeatedly applied on the container (10).

A fourth aspect is an embodiment of any one of the first to third aspects. In the fourth aspect, the storage (81) stores the estimated value, and the processor (82) determines whether the target component (T) is in an unusual state based on the estimated value stored in the storage (81).

In the fourth aspect, the processor (82) can determine whether the target component (T) is in an unusual state, using the past estimated value.

A fifth aspect is an embodiment of the fourth aspect. In the fifth aspect, the processor (82) determines a fatigue failure of the target component (T) as an unusual state based on the estimated value.

If small impacts are repeatedly applied on the target component (T), the target component (T) fails due to fatigue. Then, the processor (82) of the fifth aspect determines a fatigue failure of the target component (T) as an unusual state, using the estimated value that is the degree of impact on the target component (T).

A sixth aspect is an embodiment of any one of the first to fifth aspects. In the sixth aspect, the determination device further includes: a notification unit (83) configured to inform a person concerned of historical data on the estimated value.

In the sixth aspect, the person concerned can be informed of the historical data on the estimated value. Accordingly, based on this historical data, the person concerned can recognize the condition of the container (10); can evaluate how the container (10) has been treated; and can suggest how the container (10) should be treated in the future.

A seventh aspect is directed to a container refrigeration apparatus including: the target component (T), the sensor (65), and the determination device (80) of any one of the first to sixth aspects, wherein the container refrigeration apparatus cools an inside of a container body (11) of the container (10).

An eighth aspect is an embodiment of the seventh aspect. In the eighth aspect, the container refrigeration apparatus further includes: an electric component box (60) configured to house an electric component (63), wherein the sensor (65) is disposed inside the electric component box (60).

In the eighth aspect, the sensor (65) and the electric component (63) are housed together inside the electric component box (60). Accordingly, the electric component box (60) can prevent water of a rainfall and dust and corrosive components in the air from coming into contact with the sensor (65).

A ninth aspect is an embodiment of the eighth aspect. In the ninth aspect, the electric component includes a control board (63), and the sensor (65) is disposed on the control board (63).

In the ninth aspect, the sensor (65) is disposed on the control board (63). It is thus possible to easily supply the drive power to the sensor (65) from the power supply unit disposed on the control board (63).

A tenth aspect is an embodiment of the seventh aspect. In the tenth aspect, the container refrigeration apparatus further includes: a communication device (62) configured to communicate with another device, wherein the sensor (65) is provided in the communication device (62).

An eleventh aspect is an embodiment of any one of the seventh to tenth aspects. In the eleventh aspect, the target component (T) includes at least one of a casing (21) of the container refrigeration apparatus (20), the electric component box (60), a compressor (40), a heat exchanger (41, 44), a fan (42, 45), a refrigerant pipe (52, 53, 55, 57), a valve (51, 58, 59), or a container body (11).

In the eleventh aspect, the processor (82) estimates the degree of impact on at least one of a casing (21) of the container refrigeration apparatus (20), the electric component box (60), a compressor (40), a heat exchanger (41, 44), a fan (42, 45), a refrigerant pipe (52, 53, 55, 57), a valve (51, 58, 59), or a container body (11).

A twelfth aspect is directed to a container including: the target component (T), the sensor (65), and the determination device (80) of any one of the first to sixth aspects.

A thirteenth aspect is directed to a determination system including: a server device (91) including a storage (81) configured to store data on an influence on a detected value of a degree of impact detected by a sensor (65) disposed in a container (10) including a target component (T), where the influence is due to a difference between a position of the sensor (65) and a position of the target component (T); and a processing device (70) including a processor (82) configured to determine a degree of impact on the target component (T) as an estimated value based on the detected value detected by the sensor (65) and the data stored in the storage (81).

**In** the thirteenth aspect, the storage (81) of the server device (91) stores the data on the influence due to the difference between the position of the sensor (65) and the position of the target component (T). The processor (82) of the processing device (70) estimates the degree of impact on the target component (T) based on the detected value detected by the sensor (65) and the data stored in the storage (81) of the server device (91). Accordingly, the processor (82) can determine the degree of impact on the target component (T) as an estimated value with a smaller error caused by the influence due to the difference between the position of the sensor (65) and the position of the target component. As a result, it is possible to accurately determine the degree of impact on the target component (T) even if the target component (T) and the sensor (65) are provided at different positions.

A fourteenth aspect is an embodiment of the thirteenth aspect. **In** the fourteenth aspect, to the server device (91) via a communication device (62), the processing device (70) transmits a request to transmit the data stored in the storage (81) to the server device (91). Based on the request for transmission, the server device (91) transmits the data stored in the storage (81) to the processing device (70) via the communication device (62).

In the fourteenth aspect, it is possible to transmit the data stored in the storage (81) of the server device (91) to the processing device (70) in response to a request for transmission from the processing device (70).

A fifteenth aspect is directed to a determination method including: a storing step of storing the data on an influence on the detected value of the degree of impact detected by the sensor (65) disposed in the container (10) including the target component (T), where the influence is due to a difference between a position of the sensor (65) and a position of the target component (T); and an estimating step of determining the degree of impact on the target component (T) as an estimated value based on the detected value detected by the sensor (65) and the data stored in the storing step.

A sixteenth aspect is directed to a program configured to allow a computer to execute: a storing step of storing the data on an influence on the detected value of the degree of impact detected by the sensor (65) disposed in the container (10) including the target component (T), where the influence is due to a difference between a position of the sensor (65) and a position of the target component (T); and an estimating step of determining the degree of impact on the target component (T) as an estimated value based on the detected value detected by the sensor (65) and the data stored in the storing step.

BRIEF DESCRIPTION OF THE DRAWINGS

FIG. 1 is a vertical cross-sectional view of a container refrigeration apparatus of an embodiment taken in the front-back direction.
FIG. 2 is a perspective view of the container refrigeration apparatus as viewed from the front.
FIG. 3 is a piping system diagram of the container refrigeration apparatus.
FIG. 4 is a block diagram of main components of the container refrigeration apparatus.
FIG. 5 is an example of the data stored in a storage.
FIG. 6 is a flowchart of the operation of a determination device.
FIG. 7 is an example of an S-N curve used for a determination device of the first variation.
FIG. 8 is a flowchart of the operation of the determination device of the first variation.
FIG. 9 is a perspective view of a container refrigeration apparatus of the fifth variation as viewed from the front.
FIG. 10 is a block diagram of an overall configuration of a determination system of the seventh variation.
FIG. 11 is an example of a hardware configuration of a server device.
FIG. 12 is a sequence chart of the operation of the determination system of the seventh variation.
FIG. 13 is a flowchart of a state determination process of the seventh variation.

DESCRIPTION OF EMBODIMENT

An embodiment of the present disclosure will be described in detail below with reference to the drawings. The present disclosure is not limited to the embodiment below, and various changes can be made within the scope without departing from the technical concept of the present disclosure. Since each of the drawings is intended to illustrate the present disclosure conceptually, dimensions, ratios, or numbers may be exaggerated or simplified as necessary for ease of understanding.

(1) Overall Configuration of Container

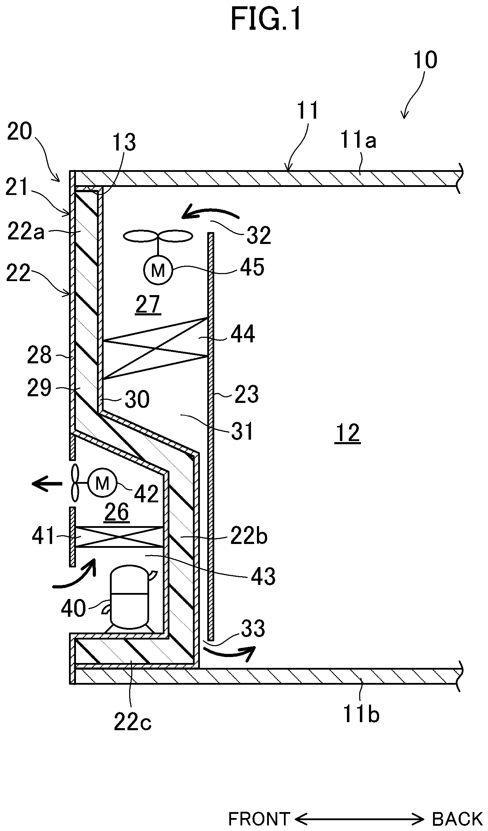

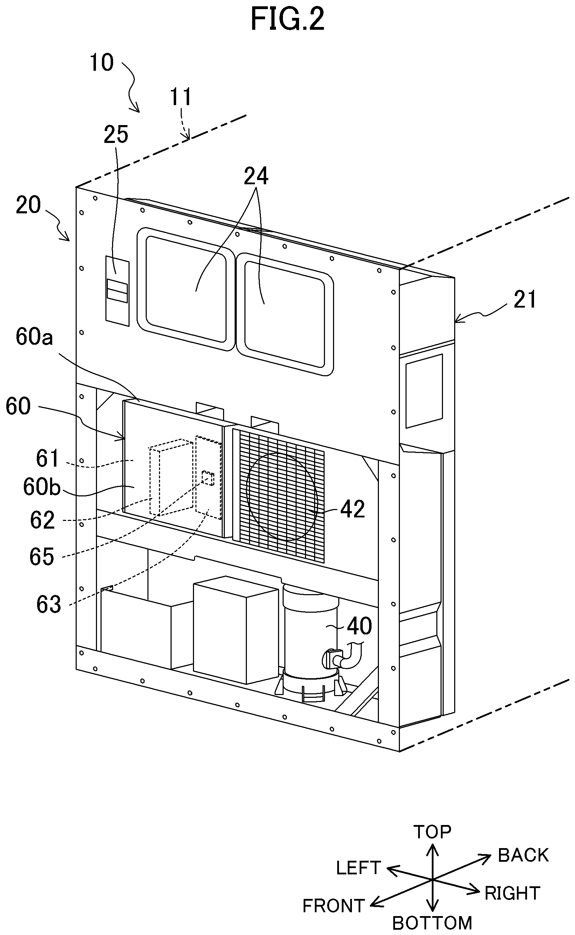

A container (10) of this embodiment will be described with reference to FIGS. 1 to 4. In the following description, the terms for directions such as "front," "back," "right," "left," "top," and "bottom" refer to the directions of the arrows in FIG. 2.

The container (10) is used for marine transportation. The container (10) is a refrigeration container that has a function of cooling the inside air. The container (10) includes a container body (11) and a container refrigeration apparatus (20). The container body (11) stores perishables such as foods and plants. The container refrigeration apparatus (20) cools an internal space (12) of the container body (11). In the following, in some cases, the internal space (12) is referred to as "the inside of the container," and the external space of the container body (11) is referred to as "the outside of the container." As shown in FIG. 2, the container body (11) includes a front surface on which an opening (13) is formed. The container refrigeration apparatus (20) is attached to the container body (11) so as to close the opening (13) of the container body (11).

(2) Container Refrigeration Apparatus

The container refrigeration apparatus (20) includes a casing (21). The casing (21) forms the lid of the opening (13) of the container body (11). The casing (21) includes a casing body (22) and a partition plate (23). The casing body (22) separates the inside and outside of the container body (11). The partition plate (23) is disposed in the internal space (12) while being located near the back surface of (or behind) the casing (21).

The container refrigeration apparatus (20) includes a compressor (40), an external heat exchanger (41), and an external fan (42), each disposed outside the container. The container refrigeration apparatus (20) includes an internal heat exchanger (44) and an internal fan (45), each disposed inside the container.

(2-1) Casing Body

As shown in FIG. 1, the casing body (22) includes a flat plate portion (22a) and a recessed portion (22b). The flat plate portion (22a) is an upper part of the casing body (22) that is substantially flush with the opening (13) of the casing (21). As shown in FIG. 2, two inspection windows (24) are formed at the middle part of the flat plate portion (22a) in the right-left direction. The inspection windows (24) are transparent windows that allow inspection of the inside of the casing body (22). A ventilator (25) is provided to the left of the inspection windows (24). The ventilator (25) ventilates the inside of the container.

The recessed portion (22b) is a lower part of the casing (21). The recessed portion (22b) is recessed backward from the lower end of the flat plate portion (22a). An external storage space (26) is formed in front of the recessed portion (22b). An internal storage space (27) is formed above the recessed portion (22b) and between the flat plate portion (22a) and the partition plate (23). The lower end of the recessed portion (22b) forms a bottom plate (22c). The bottom plate (22c) extends between the right and left ends of the casing body (22).

The casing body (22) includes an external casing (28), a heat insulating layer (29), and an internal casing (30), which are stacked in the thickness direction (the front-back direction). The external casing (28) faces the outside of the container. The internal casing (30) faces the inside of the container. The heat insulating layer (29) is provided between the external casing (28) and the internal casing (30). The external casing (28) is made of an aluminum material. The internal casing (30) is made of fiber-reinforced plastic (FRP). The heat insulating layer (29) is made of a foamed resin.

(2-2) Partition Plate and Air Passage

The partition plate (23) is a plate-shaped member located behind the recessed portion (22b). The partition plate (23) extends in the top-bottom direction while being located at a predetermined distance away from the back surface of the recessed portion (22b). An internal passage (31) through which the inside air flows is formed between the casing body (22) and the partition plate (23). An inflow port (32) is formed between the upper end of the partition plate (23) and the upper wall (11a) of the container body (11). The inflow port (32) allows the internal space (12) and the inflow end of the internal passage (31) to communicate with each other. An outflow port (33) is formed between the lower end of the partition plate (23) and the lower wall (11b) of the container body (11). The outflow port (33) allows the internal space (12) and the outflow end of the internal passage (31) to communicate with each other.

(2-3) External Components

The external storage space (26) accommodates the compressor (40), the external heat exchanger (41), and the external fan (42). The compressor (40) is installed on the bottom plate (22c) of the casing (21). The compressor (40) is located in a lower part of the external storage space (26). The compressor (40) is located in a right part of the external storage space (26). Although not shown in FIG. 2, an accumulator (54) is also installed on the bottom plate (22c).

The external fan (42) is located in an upper part of the external storage space (26). The external fan (42) is a propeller fan. The external fan (42) includes an impeller and a motor that drives and rotates the impeller. As shown in FIG. 2, an external passage (43) through which the external air flows is formed behind the external fan (42).

In the external storage space (26), the external heat exchanger (41) is located at the level between the external fan (42) and the compressor (40). The external heat exchanger (41) is located in the external passage (43). The external heat exchanger (41) is a fin-and-tube heat exchanger.

(2-4) Internal Components

The internal storage space (27) accommodates the internal heat exchanger (44) and the internal fan (45). The internal heat exchanger (44) is supported by the casing (21) so as to extend between the casing body (22) and the partition plate (23). The internal heat exchanger (44) is a fin-and-tube heat exchanger.

The internal fan (45) is disposed upstream of the internal heat exchanger (44) in the internal passage (31). The internal fan (45) is located above the internal heat exchanger (44). The internal fan (45) is a propeller fan. The internal fan (45) includes an impeller and a motor that drives and rotates the impeller.

(2-5) Configuration of Refrigerant Circuit

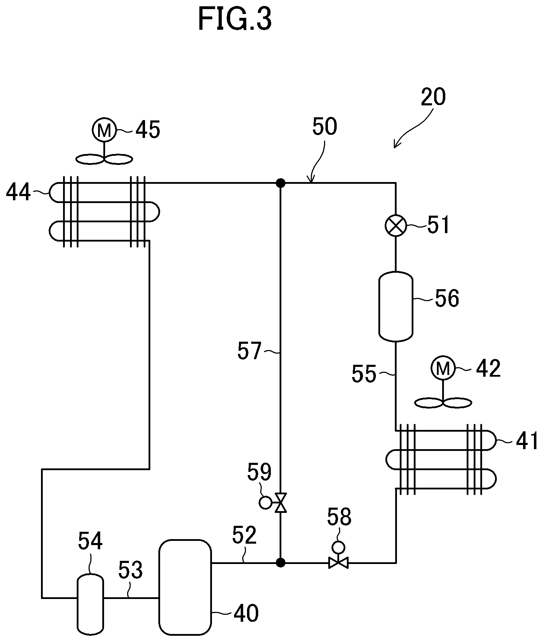

As shown in FIG. 3, the container refrigeration apparatus (20) includes a refrigerant circuit (50). The refrigerant circuit (50) is filled with a refrigerant. The refrigerant circulates in the refrigerant circuit (50), whereby the refrigerant circuit (50) performs a vapor compression refrigeration cycle.

The refrigerant circuit (50) includes, as main components, the compressor (40), the external heat exchanger (41), an expansion valve (51), and the internal heat exchanger (44).

The compressor (40) compresses a sucked refrigerant. The compressor (40) discharges a compressed refrigerant. The discharge portion of the compressor (40) is connected with a discharge pipe (52). The suction portion of the compressor (40) is connected with a suction pipe (53). The suction pipe (53) is provided with the accumulator (54). The accumulator (54) is a container that stores a liquid refrigerant.

The external heat exchanger (41) exchanges heat between the refrigerant flowing therein and the external air. The gas end of the external heat exchanger (41) communicates with the discharge pipe (52). The liquid end of the external heat exchanger (41) is connected to the liquid end of the internal heat exchanger (44) via a liquid pipe (55). The external heat exchanger (41) functions as a radiator (condenser) through which the refrigerant dissipates heat to the air.

The expansion valve (51) is provided in the liquid pipe (55). The expansion valve (51) decompresses a high-pressure refrigerant to a low-pressure refrigerant. The expansion valve (51) is an electronic expansion valve whose opening degree is adjustable. A receiver (56) is provided in part of the liquid pipe (55) between the external heat exchanger (41) and the expansion valve (51). The receiver (56) is a container that stores an excessive refrigerant of the refrigerant circuit (50).

The internal heat exchanger (44) exchanges heat between the refrigerant flowing therein and the inside air. The gas end of the internal heat exchanger (44) communicates with the suction pipe (53). The internal heat exchanger (44) functions as an evaporator through which the refrigerant absorbs heat from the air.

The refrigerant circuit (50) includes a bypass pipe (57). The inflow end of the bypass pipe (57) communicates with the discharge pipe (52), and the outflow end of the bypass pipe (57) communicates with the liquid pipe (55). The bypass pipe (57) sends the refrigerant discharged from the compressor (40) to the internal heat exchanger (44) while allowing the refrigerant to bypass the external heat exchanger (41).

The refrigerant circuit (50) is provided with a first valve (58) and a second valve (59). The first valve (58) is provided between the discharge side of the compressor (40) and the gas end of the external heat exchanger (41) and downstream of the connection of the bypass pipe (57). The second valve (59) is provided in the bypass pipe (57). The first valve (58) and the second valve (59) are electromagnetic on-off valves. The first valve (58) and the second valve (59) may be flow rate control valves whose opening degree is adjustable.

(2-6) Electric Component Box

As shown in FIG. 2, the casing (21) is provided with an electric component box (60). The electric component box (60) houses electric components such as a control board (63), a power supply circuit board, a power source terminal, and other electronic devices. The electric component box (60) is provided in a middle part of the casing (21) in the top-bottom direction. The electric component box (60) includes a box body (60a), the front side of which has an opening, and a lid (60b) that covers the opening of the box body (60a). The box body (60a) is formed in a substantially rectangular parallelepiped shape that is hollow inside. The lid (60b) is fixed to the box body (60a) via a hinge (not shown). The lid (60b) can open and close the front opening of the box body (60a). A sealing member to prevent the entry of moisture and air is provided between the electric component box (60) and the lid (60b). The electric component box (60) is made of a resin material.

A first space (61) inside the electric component box (60) accommodates a communication device (62) and the control board (63).

The communication device (62) is a communication interface that conducts communications between the container refrigeration apparatus (20) and other external devices (terminal devices). The communication device (62) is a modem. The communication device (62) transmits the information on the container refrigeration apparatus (20) to the terminal devices. The communication device (62) receives the information from the terminal devices. The communication device (62) is disposed in a substantially middle part of the first space (61) in the right-left direction. The outer shape of the communication device (62) is a substantially rectangular parallelepiped shape of which the thickness direction is the right-left direction.

The control board (63) is a printed board on which a control circuit is mounted to control each device of the container refrigeration apparatus (20). Wiring for power supplying or for grounding is also mounted on the control board (63). The control board (63) is disposed in a so-called low-voltage space in the first space (61). The control board (63) of this example is supported by the electric component box (60) so that the thickness direction of the board matches the front-back direction. The control board (63) is formed in a vertically elongate shape.

**EP 4 597 012 A1**

(2-7) Acceleration Sensor

As shown in FIG. 2, the container refrigeration apparatus (20) includes an acceleration sensor (65). The acceleration sensor (65) is a sensor that detects the degree of impact on the target component (T). The acceleration sensor (65) detects the acceleration [G] as an index (physical quantity) of the degree of impact on the target component (T).

The acceleration sensor (65) of this embodiment is a three-axis acceleration sensor. Among the three axes, the X axis corresponds to the front-back direction of FIG. 2, the Y axis corresponds to the right-left direction of FIG. 2, and the Z axis corresponds to the top-bottom direction of FIG. 2.

The acceleration sensor (65) is disposed in the first space (61) inside the electric component box (60). Specifically, the acceleration sensor (65) is provided on the control board (63). Precisely, the acceleration sensor (65) and other electronic components are mounted together on the control board (63). The acceleration sensor (65) is disposed in a middle part of the control board (63) in the longitudinal direction (the top-bottom direction), for example. Detection signals of the acceleration sensor (65) are input to the control board (63).

(2-8) Controller

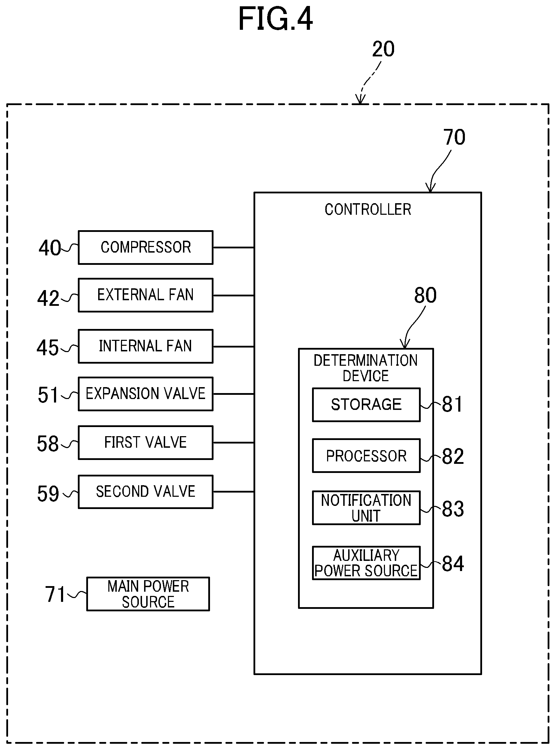

As shown in FIG. 4, the container refrigeration apparatus (20) includes a controller (70). The controller (70) controls the container refrigeration apparatus (20). The controller (70) includes the control board (63), and is disposed in the first space (61) inside the electric component box (60). The controller (70) includes a microprocessor, an electric circuit, and an electronic circuit. The microprocessor includes a central processing unit (CPU), a memory, a communication interface, an analog input/output, and a contact input/output interface. The memory stores the programs executed by the CPU and the data employed by the programs.

The controller (70) controls ON/OFF switching of the compressor (40) and the number of rotations of the motor of the compressor (40). The controller (70) controls ON/OFF switching of the external fan (42) and the number of rotations of the motor of the external fan (42). The controller (70) controls ON/OFF switching of the internal fan (45) and the number of rotations of the motor of the internal fan (45). The controller (70) controls the opening degree of the expansion valve (51). The controller (70) controls opening and closing of the first valve (58) and the second valve (59).

The controller (70) receives detection signals from a plurality of sensors. The plurality of sensors include a refrigerant temperature sensor, a refrigerant pressure sensor, and an air temperature sensor. The refrigerant temperature sensor includes a sensor that detects the temperature of a refrigerant discharged from the compressor (40) and a sensor that detects the temperature of a refrigerant sucked into the compressor (40). The refrigerant pressure sensor includes a sensor that detects the high pressure of the refrigerant circuit (50) and a sensor that detects the low pressure of the refrigerant circuit (50). The air temperature sensor includes a sensor that detects the temperature of air on the suction side of the internal heat exchanger (44) and a sensor that detects the temperature of air on the discharge side of the internal heat exchanger (44).

(2-9) Main Power Source

As shown in FIG. 4, the container refrigeration apparatus (20) includes a main power source (71). The main power source (71) is a power source that drives the container refrigeration apparatus (20). The main power source (71) supplies electric power to each device of the container refrigeration apparatus (20). Specifically, the main power source (71) supplies electric power to the compressor (40), the external fan (42), and the internal fan (45), via a power supply circuit. The main power source (71) supplies electric power to the valves of the refrigerant circuit (50) that include the first valve (58) and the second valve (59). The main power source (71) supplies electric power to the controller (70).

(3) Determination Device

As shown in FIG. 4, the controller (70) includes a determination device (80). The determination device (80) is used to estimate the degree of impact on the target component (T) of the container (10). The determination device (80) determines whether the target component (T) is in an unusual state based on the estimated value of the degree of impact. The determination device (80) includes a storage (81), a processor (82), a notification unit (83), and an auxiliary power source (84).

(3-1) Storage

The storage (81) includes a hard disk drive (HDD), a random access memory (RAM), a solid state drive (SSD), and the like. The storage (81) stores the data (first data) for estimating the degree of impact on the target component (T). The first data is the data on the influence due to the difference between the position of the acceleration sensor (65) and the

7

position of the target component (T).

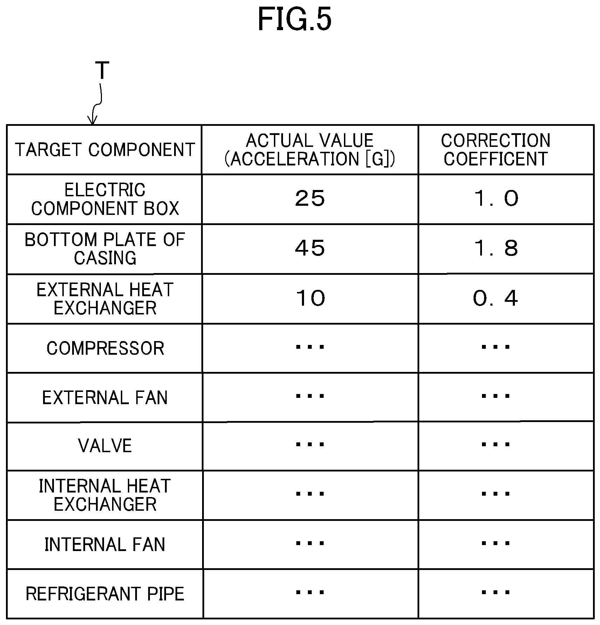

FIG. 5 is an example of the first data. The first data is a data table on which the target components (T) are associated with the correction coefficients of those target components (T). The storage (81) does not need to store the actual values shown in FIG. 5. In this example, the target components (T) include the electric component box (60), the bottom plate (22c) of the casing (21), the external heat exchanger (41), the compressor (40), the external fan (42), the valve, the internal heat exchanger (44), the internal fan (45), and the refrigerant pipe. The electric component box (60) is disposed at the same position as the acceleration sensor (65) is. The target components (T) other than the electric component box (60) are disposed at positions different from where the acceleration sensor (65) is disposed.

The valve is a valve provided in the refrigerant circuit (50) and includes the expansion valve (51), the first valve (58), and the second valve (59). The valve may be a four-way switching valve, a check valve, a rotary valve, or the like. The refrigerant pipe is a pipe that forms a refrigerant circuit. The refrigerant pipe includes the discharge pipe (52), the suction pipe (53), the liquid pipe (55), and the bypass pipe (57). The refrigerant pipe may be an injection pipe that is connected when the compressor (40) is conducting compression, or a heating pipe that is disposed inside the drain pan.

The first data of this embodiment is obtained by experiment in advance. The experiment is conducted to measure the degree of impact (acceleration) applied on each target component (T) when a real impact is applied on the container (10). For example, if the acceleration of the electric component box (60) is 25[G] and the acceleration of the bottom plate (22c) of the casing (21) is 45[G], the acceleration that is 1.8 times faster than the acceleration of the electric component box (60) is applied on the bottom plate (22c). In this case, the correction coefficient of the bottom plate (22c) is 1.8, where the electric component box (60) disposed at the same position as the acceleration sensor (65) is regarded as a reference and where the correction coefficient of the electric component box (60) is defined as 1.0. That is, the correction coefficient is the ratio of an actual value of the acceleration applied on each target component (T) to an actual value of the acceleration applied on the electric component box (60).

The correction coefficient is used to decrease the error in the degree of impact that is caused by the influence due to the difference between the position of the acceleration sensor (65) and the position of the target component (T). Here, specifically, the influence due to the difference between the position of the acceleration sensor (65) and the position of the target component (T) means the influence on how easily the impact is transmitted that is due to a variation of the distance of the path between the acceleration sensor (65) and the target component (T), a variation of the material of that path, a variation of the method of fixing the acceleration sensor (65), or the like. The correction coefficient is an index taking those influences into consideration.

The correction coefficient obtained by experiment in this manner is associated with the identification information on the target component (T) and then stored in the storage (81).

The data on the influence due to the difference between the position of the acceleration sensor (65) and the position of the target component (T) does not need to be a data table, and may be a function obtained by simulation or the like, or a learned model obtained by machine learning.

(3-2) Processor

The processor (82) includes a microprocessor, an electric circuit, and an electronic circuit. The microprocessor includes a central processing unit (CPU), a memory, a communication interface, an analog input/output, and a contact input/output interface. The memory stores the programs executed by the CPU and the data employed by the programs. The processor (82) determines the acceleration applied on the target component (T) as an estimated value based on the acceleration that is a detected value detected by the acceleration sensor (65) and the first data that is stored in the storage (81). Specifically, the processor (82) multiplies the acceleration detected by the acceleration sensor (65) by the correction coefficient of each target component (T), thereby determining the acceleration of each target component (T) as an estimated value.

The processor (82) determines whether the target component (T) is in an unusual state based on the estimated value of the degree of impact on the target component (T). If the estimated value of the target component (T) exceeds the first threshold, the processor (82) determines that this target component (T) is in an unusual state. The unusual state described herein means that the target component (T) is plastically damaged by one single impact that is relatively large. The first threshold is determined by experiment or by simulation in advance. The first threshold is stored in the storage (81). The first threshold is a single kind of value that is independent from the types of the target components (T), but may be multiple different kinds of values that are dependent on the types of the target components (T).

If the number of times the estimated value of the target component (T) exceeds the second threshold exceeds a predetermined number of times, the processor (82) determines that the target component (T) is in an unusual state. The second threshold is lower than the first threshold. The unusual state described herein means that the target component (T) is plastically damaged by multiple impacts. The second threshold is determined by experiment or by simulation in advance. The second threshold is stored in the storage (81). The second threshold is a single kind of value that is independent from the types of the target components (T), but may be multiple different kinds of values that are dependent on the types of the target components (T).

The predetermined number of times is determined by experiment or by simulation in advance. The predetermined number of times is stored in the storage (81). The predetermined number of times is a single kind of value that is independent from the types of the target components (T), but may be multiple different kinds of values that are dependent on the types of the target components (T).

(3-3) Notification Unit

The notification unit (83) informs a person concerned of the historical data on the estimated value stored in the storage (81). The historical data includes the time-series data on the estimated value of the degree of impact on each target component (T) and the information indicating that the target component (T) is in an unusual state. The person concerned includes a user of the container (10), a staff member of a maintenance company of the container (10), a staff member of a service company of the container (10), a staff member of a sales company of the container (10), a staff member of a management company of the container (10), and the like. The notification unit (83) informs the person concerned of the time-series data by using characters, figures, graphs, sound, and the like, for example. The notification unit (83) includes a transmission unit that outputs that time-series data to a predetermined terminal. The notification unit (83) also includes an alerting unit that informs the person concerned that the target component (T) is in an unusual state by using characters, figures, symbols, icons, sound, light, and the like, for example.

(3-4) Auxiliary Power Source

The auxiliary power source (84) is a power source that drives the determination device (80) when the main power source (71) is OFF. For example, when the container refrigeration apparatus (20) is stopped, the auxiliary power source (84) functions as a power source for the determination device (80). When the container refrigeration apparatus is operating, the auxiliary power source (84) may function as a power source for the determination device (80). When the container refrigeration apparatus is operating, the main power source (71) may function as a power source for the determination device (80). The auxiliary power source (84) is a dry cell or a storage battery, for example.

(4) Operation

The container refrigeration apparatus (20) performs a cooling operation and a defrosting operation.

When the cooling operation is performed, the refrigeration cycle is created in which the refrigerant compressed in the compressor (40) is condensed in the external heat exchanger (41), then decompressed in the expansion valve (51), and then evaporated in the internal heat exchanger (44). The air having flowed out from the internal space (12) to the internal passage (31) is cooled by the internal heat exchanger (44) that functions as an evaporator. The cooled air is sent to the internal space (12).

When the defrosting operation is performed, the refrigerant compressed in the compressor (40) flows through the bypass pipe (57) and then flows through the internal heat exchanger (44). The frost on the surface of the internal heat exchanger (44) is melted by the heat of the refrigerant flowing through the inside of the internal heat exchanger (44).

(5) Operation of Determination Device

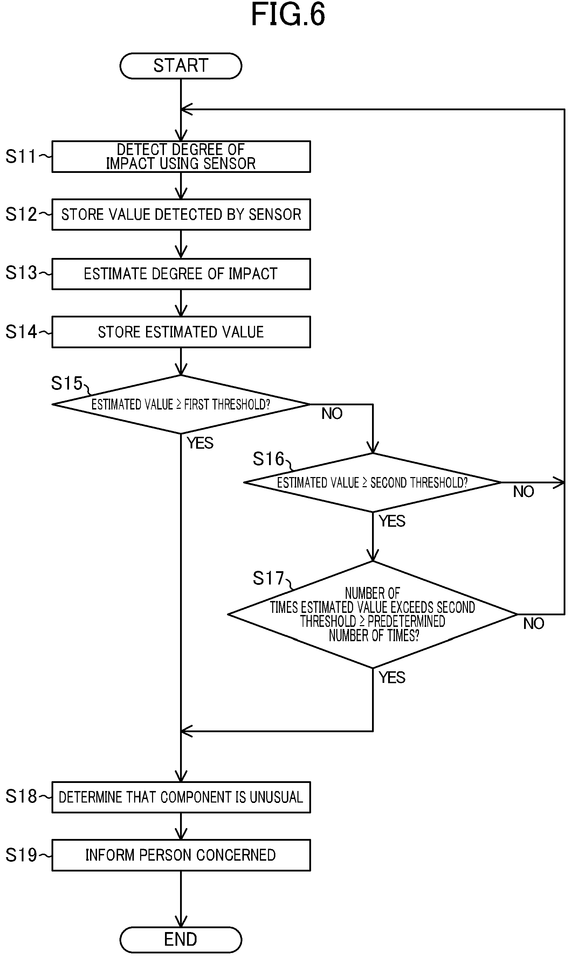

The operation of the determination device (80) will be described in detail with reference to the flowchart of FIG. 6.

In step S11, the acceleration sensor (65) detects the acceleration, which is the degree of impact. The acceleration sensor (65) is provided inside the electric component box (60). Accordingly, the acceleration sensor (65) substantially detects the acceleration applied on the electric component box (60).

In step S12, the storage (81) stores the detected value detected by the acceleration sensor (65). The storage (81) stores the detected value every time the acceleration sensor (65) conducts detection. In step S13, the processor (82) determines the estimated value of the acceleration of each target component (T) based on the detected value detected by the acceleration sensor (65) in step S11 and the first data stored in the storage (81). The detected value detected by the acceleration sensor (65) may be read out from the storage (81). The processor (82) multiplies the detected value of the acceleration by the correction coefficient of each target component (T). Specifically, for example, if the detected value detected by the acceleration sensor (65) is 10[G], the processor (82) multiplies the detected value 10[G] by the correction coefficient 1.8 of the bottom plate (22c) of the casing (21) in FIG. 5, thereby determining the estimated value of the bottom plate (22c) (=18[G]).

In step S14, the storage (81) stores the estimated value of each target component (T) determined in step S13. The storage (81) stores the estimated value of each target component (T) every time the estimated value is determined in step S13.

In step S15, the processor (82) compares the estimated value determined in step S13 with the first threshold in order to determine which one is higher (or lower) than the other. In step S15, if the estimated value is higher than or equal to the first threshold, the process goes to step S18. In step S18, the processor (82) determines that the target component (T) as a determination object is in an unusual state. For example, if the estimated value of the bottom plate (22c) is higher than or equal to the first threshold, the processor (82) determines that the bottom plate (22c) is in an unusual state.

Determining that the target component (T) is in an unusual state, the processor (82) outputs the first signal indicating that the target component (T) is in an unusual state.

In step S19, the notification unit (83) informs the person concerned of the information indicating that the target component (T) is in an unusual state. Receiving the first signal output from the processor (82), the notification unit (83) informs the person concerned of the information indicating that the target component (T) is in an unusual state. This information includes the type of the target component (T). Accordingly, the person concerned can promptly recognize that the target component (T) is in an unusual state, and thus can do something against it.

In step S15, if the estimated value is lower than the first threshold, the process goes to step S16. In step S16, the processor (82) compares the estimated value with the second threshold in order to determine which one is higher (or lower) than the other. If the estimated value is lower than the second threshold, the process returns to step S11. If the estimated value is higher than or equal to the second threshold, the process goes to step S17.

In step S17, the processor (82) compares the number of times the estimated value exceeds the second threshold with the predetermined number of times in order to determine which one is higher (or lower) than the other. Here, the number of times the estimated value exceeds the second threshold is the total sum of the number of times counted as appropriate after the determination device (80) starts its operation. The total sum of the number of times may be determined based on the estimated value stored in the storage (81), or the count value of the total sum of the number of times the estimated value exceeds the second threshold may be stored in the storage (81). In step S17, if the number of times the estimated value exceeds the second threshold is lower than the predetermined number of times, the process returns to step S11. If the number of times the estimated value exceeds the second threshold is higher than or equal to the predetermined number of times, the process goes to step S18. In step S18, the processor (82) determines that the target component (T) is in an unusual state, and then, in step S19, the notification unit (83) informs the person concerned that the target component (T) is in an unusual state.

(6) Advantages of Embodiment

In the embodiment, the storage (81) stores the data on the influence on the detected value of the degree of impact detected by the acceleration sensor (65) that is due to the difference between the position of the acceleration sensor (65) and the position of the target component (T). The processor (82) determines the degree of impact on the target component (T) as an estimated value based on the detected value detected by the sensor (65) and the data stored in the storage (81).

It is conceivable to detect the physical quantity of the degree of impact on the target component of the container by using the sensor and then to determine the degree of impact on the target component based on the detected value detected by the sensor. However, if the position of the sensor and the position of the target component are different, it might be impossible to precisely determine the degree of impact on the target component because of the influence due to the difference between the two positions.

Specifically, since how easily the impact is transmitted from the sensor to the target component depends on the length of the path between the positions of the two components or the method of fixing the sensor, for example, errors are observed between the degree of impact detected by the sensor and the degree of impact applied on the target component. If there is an error caused by the influence due to the difference between the position of the sensor and the position of the target component, it is impossible to accurately determine the degree of impact on the target component.

According to the control of this embodiment, when the target component (T) and the acceleration sensor (65) are provided at different positions in the container, it is possible to estimate the degree of impact on the target component (T) with a smaller error caused by the influence due to the positional difference. As a result, it is possible to accurately estimate the degree of impact on the target component (T).

The number of target components (T) is larger than the number of acceleration sensors (65). Accordingly, it is possible to estimate the degrees of impact on the plurality of target components (T) while reducing the number of acceleration sensors (65), and thus it is possible to reduce the number of components. The acceleration sensor (65) is one single acceleration sensor (65) in one preferred embodiment.

If the estimated value exceeds the first threshold, the processor (82) determines that the target component (T) is in an unusual state. Accordingly, for example, if the container (10) lifted up by a crane or the like is dropped off and accordingly a relatively large impact is applied on the container (10), it is possible to promptly determine that the target component (T) is in an unusual state.

If the number of times the estimated value exceeds the second threshold exceeds a predetermined number of times, the processor (82) determines that the target component (T) is in an unusual state. Accordingly, if multiple impacts smaller than the first threshold are applied on the target component (T) and accordingly the target component (T) is plastically damaged, it is possible to promptly determine that the target component (T) is in an unusual state.

The processor (82) determines whether the target component (T) is in an unusual state based on the estimated value stored in the storage (81). Accordingly, it is possible to accurately determine whether the target component (T) is in an unusual state based on the past data accumulated.

The notification unit (83) informs the person concerned of the time-series data on the estimated value in addition to whether the component is in an unusual state. By checking the time-series data on the estimated value, the person concerned can identify in time series which target component (T) has been impacted and what kind of impact has been applied. Accordingly, based on this time-series data, the person concerned can recognize the condition of the container (10); can evaluate how the container (10) has been treated when being transported, loaded, and unloaded; and can suggest how the container (10) should be treated in the future. The notification unit (83) may inform the person concerned of the time-series data on the detected value detected by the acceleration sensor (65).

The acceleration sensor (65) is disposed inside the electric component box (60). The electric component box (60) is less likely to be invaded by water of a rainfall, condensation water, seawater, and the like. The electric component box (60) is less likely to be invaded by dust, corrosive components, and the like in the air. Accordingly, it is possible to reduce deterioration of the acceleration sensor (65).

The acceleration sensor (65) is disposed on the control board (63). Accordingly, the acceleration sensor (65) can be supplied with electric power while being disposed on the control board (63); the acceleration sensor (65) can be controlled while being disposed on the control board (63); and the acceleration sensor (65) can output a detection signal to the control board (63). As a result, it is possible to shorten or substantially eliminate the electric wire of the acceleration sensor (65). It is possible to make the noise less superimposed on the detection signal of the acceleration sensor (65), and thus it is possible to reduce a decrease in the accuracy level of estimation of the degree of impact that is due to the influence of noise.

In addition, the control board (63) is made of a plate-shaped resin material, and thus it is also possible to reduce a decrease in the impact on the acceleration sensor (65).

Since the determination device (80) includes the auxiliary power source (84), it is possible to continuously determine the degree of impact on the container (10) as an estimated value even when the container refrigeration apparatus (20) is stopped. Further, it is possible to obtain the historical data by continuously storing that estimated value in the storage (81).

The acceleration sensor (65) is a three-axis-type acceleration sensor. Accordingly, in addition to the impact in the top-bottom direction generated when the container (10) is loaded or unloaded, the impact in the front-back direction or in the right-left direction generated when the container (10) is transported can be evaluated. In particular, if the container (10) is loaded on the transportation such as a train or a vehicle, the impact in the front-back direction generated when a brake is applied and the impact in the right-left direction generated when the transportation turns on a curve can be evaluated.

(7) Variations

The embodiment may be modified as follows.

(7-1) First Variation: Determination of Fatigue Failure

The processor (82) may determine a fatigue failure of the target component (T) as an unusual state based on the estimated value of the target component (T). The processor (82) determines a fatigue failure of the target component (T) as an unusual state based on the stress amplitude $\sigma$ applied on the target component (T) and the number of cycles the stress amplitude $\sigma$ is applied.

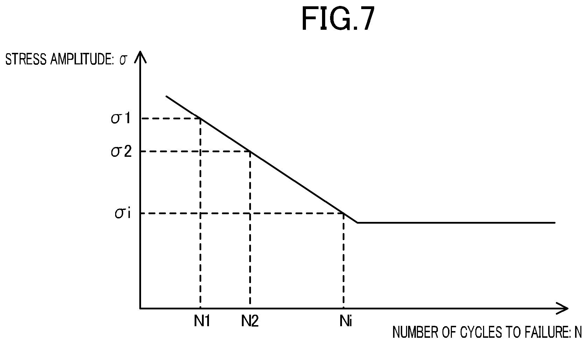

The fatigue failure of the target component (T) can be determined using the data (the second data) on the S-N curve (see FIG. 7) that shows the relationship between the stress amplitude $\sigma$ applied on the target component (T) and the number of cycles to failure N. The second data is obtained by experiment in advance for each target component (T) and stored in the storage (81). The number of cycles to failure N is the number of cycles the stress amplitude $\sigma$ is applied until the target component (T) fails. The larger the stress amplitude $\sigma$ is, the smaller the number of cycles to failure N is, whereas the smaller the stress amplitude $\sigma$ is, the larger the number of cycles to failure N is.

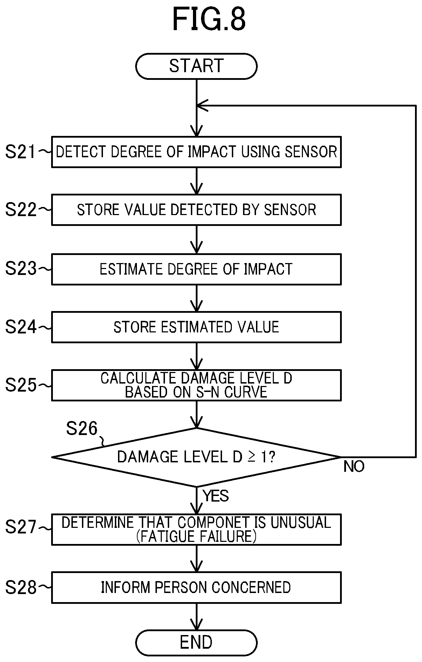

The operation according to the first variation for determining a fatigue failure as an unusual state will be described with reference to FIG. 8. In step S21, the acceleration sensor (65) detects the acceleration, which is the degree of impact.

In step S22, the storage (81) stores the detected value detected by the acceleration sensor (65). In step S22, the storage (81) stores the detected value every time the acceleration sensor (65) conducts detection.

In step S23, the processor (82) determines the estimated value of the acceleration of each target component (T) based on the detected value detected by the acceleration sensor (65) and the second data stored in the storage (81). The process of step S23 is the same in detail as the process of step S13.

In step S24, the storage (81) stores the estimated value of each target component (T) determined in step S23. The storage (81) stores the estimated value of each target component (T) every time the estimated value is determined in step S23.

In step S25, the processor (82) calculates the damage level D of each target component (T). The damage level D can be expressed by the following equation.

$$\text{Damage Level } D = (n1/N1) + (n2/N2) \ldots + (ni/Ni), \text{ where } i = 1, 2, 3, \ldots \qquad \cdots (1)$$

Here, n1 is the number of times the stress amplitude σ1 is applied on the target component (T); n2 is the number of times the stress amplitude σ2 is applied on the target component (T); and ni is the number of times the stress amplitude σi is applied on the target component (T). N1 is the number of cycles the stress amplitude σ1 is applied until the target component (T) fails; N2 is the number of cycles the stress amplitude σ2 is applied until the target component (T) fails; and Ni is the number of cycles the stress amplitude σi is applied until the target component (T) fails.

The stress amplitude σ of the target component (T) correlates with the degree of impact (the acceleration) applied on the target component (T). Accordingly, by using a correlation expression or the like obtained in advance, it is possible to determine the stress amplitude σ1, σ2, ..., σi from the estimated value of the target component (T). It is also possible to determine the number of times n1, n2, ..., ni based on the time series of the estimated value stored in the storage (81). Then, the processor (82) calculates the damage level D of each target component (T) using Equation (1) above.

In step S26, the processor (82) determines whether the damage level D of the target component (T) is higher than or equal to one. The processor (82) conducts this determination for each target component (T). If the damage level D is lower than one in step S26, the process returns to step S21. If the damage level D is higher than or equal to one in step S26, the process goes to step S27.

In step S27, the processor (82) determines a fatigue failure of the target component (T) as a determination object as an unusual state. For example, the processor (82) determines a fatigue failure of the refrigerant pipe as an unusual state based on the estimated value of the refrigerant pipe if the damage level D of the refrigerant pipe is higher than or equal to one.

In step S28, the notification unit (83) informs the person concerned that the target component (T) has failed due to fatigue. This information that the notification unit (83) outputs includes the type of the target component (T). Accordingly, the person concerned can promptly recognize that the target component (T) has failed due to fatigue or will probably fail due to fatigue, and thus can do something against it.

(7-2) Second Variation: Variation of First Data

The first data of the embodiment employs a specific value as the correction coefficient of the target component (T) regardless of how large (or small) the degree of impact (the acceleration) is. However, the storage (81) may store various correction coefficients that depend on the degree of impact (the acceleration). In this case, the processor (82) determines the degree of impact on the target component (T) as an estimated value by using the detected value detected by the sensor (65) and the correction coefficient that corresponds to the value of the acceleration of that detected value.

(7-3) Third Variation: Variation of Target Component

In the embodiment, the target components (T) include the electric component box (60), the bottom plate (22c) of the casing (21), the external heat exchanger (41), the compressor (40), the external fan (42), the valve, the internal heat exchanger (44), the internal fan (45), and the refrigerant pipe. The target component (T) may be a component other than those components.

For example, the target component (T) may be the container body (11). If an impact is applied on the container body (11), the thermal insulation or hermeticity of the container body (11) may deteriorate. By determining the degree of impact on the container body (11) as an estimated value, it is possible to determine the deterioration of the thermal insulation or hermeticity of the container body (11) as an unusual state.

The target component (T) may be the accumulator (54), the receiver (56), the flat plate portion (22a) of the casing (21), the recessed portion (22b) of the casing (21), the inspection windows (24), the partition plate (23), the ventilator (25), or the inspection windows (24). The target component (T) may be a plate-type heat exchanger as another heat exchanger or a heater used for defrosting or the like. The target component (T) may be a four-way switching valve, a three-way valve, a rotary valve, or a check valve, as another valve. The target component (T) may be a drain pan or a drain pipe that discharges water stored in the drain pan.

The target component (T) may be a support body that supports the components described above.

The target component (T) may be a component of an air conditioning apparatus. The air control apparatus is provided in the container refrigeration apparatus (20) and adjusts the composition of air in the internal space (12). The air conditioning apparatus includes components such as an adsorption tower, a gas separation membrane, a pump, and an air pipe.

The target component (T) may be one single target component (T). In this case, the one single target component (T) is disposed at a position different from where the sensor (65) is disposed.

(7-4) Fourth Variation: Variation of Sensor

The acceleration sensor (65) may be a single-axis acceleration sensor. In this case, the acceleration sensor (65) detects the acceleration in the Z-axis direction (the top-bottom direction) in one preferred embodiment.

The acceleration sensor (65) may be a six-axis acceleration sensor. In this case, the acceleration sensor (65) can detect the accelerations in not only the X-axis, the Y-axis, and the Z-axis but also the rotational directions about those three axes. In particular, if the container (10) is provided on a vehicle, the six-axis acceleration sensor (65) is used in one preferred embodiment.

The sensor for detecting the degree of impact may be a contact-type vibration sensor, such as a frequency-changeable vibration sensor, a piezoelectric vibration sensor, an electric vibration sensor, or a servo vibration sensor; or may be a non-contact-type vibration sensor, such as an eddy-current vibration sensor, a capacitance vibration sensor, or an optical vibration sensor.

The sensor for detecting the degree of impact may be a sensor that detects not the acceleration but the speed or the amount of displacement of the sensor.

The sensor (65) for detecting the degree of impact may be a GPS receiver. By using a GPS receiver, it is possible to determine the displacement of the GPS receiver per unit time. By determining the acceleration of the GPS receiver based on the displacement and time, it is possible to detect the degree of impact.

(7-5) Fifth Variation: Arrangement of Sensor

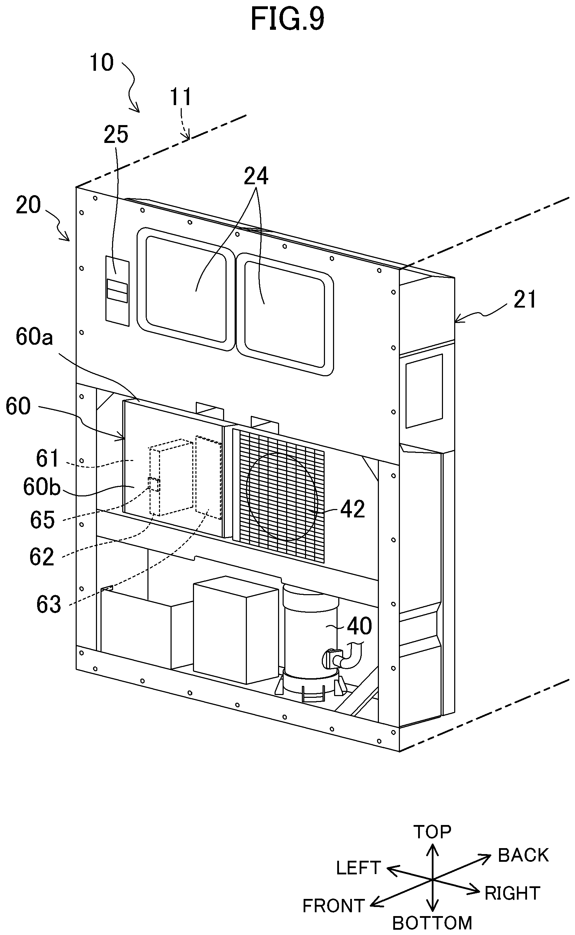

As shown in FIG. 9, the sensor (65) may be provided in the communication device (62). Specifically, the sensor (65) is provided in the first space (61) inside the electric component box (60) and fixed to the front surface of the communication device (62).

The sensor (65) may be disposed outside the electric component box (60). The sensor (65) may be provided on a motor of the compressor (40) or the external fan (42), for example.

(7-6) Sixth Variation: Applicable Places of Determination Device

The determination device (80) of the embodiment is provided in the controller (70) of the container refrigeration apparatus (20). However, the determination device (80) may be separated from the controller (70). The determination device (80) may be an additional unit that includes the sensor (65), the storage (81), and the processor (82) and that can be added to the container refrigeration apparatus (20). The additional unit further includes the notification unit (83) and the auxiliary power source (84) in one preferred embodiment.

The determination device (80) may be provided in a server device on a network or may be provided in a communication terminal such as a smartphone. The determination device (80) can receive a detection signal from the sensor (65) in a wired or wireless manner. The determination device (80) can output the historical data stored in the storage (81) and the result of determining whether the component is in an unusual state to a predetermined terminal, display device, or the like.

The determination device (80) may be provided in the container (10) that does not include the container refrigeration apparatus (20). The container (10) includes a container body (11) and an opening/closing door that closes an opening (13) of the container body (11). The sensor (65) is provided on the container body (11) or the opening/closing window. The determination device (80) estimates the degree of impact on the target component (T) that is disposed at a position different from where the sensor (65) is disposed.

(7-7) Seventh Variation

A seventh variation is directed to a determination system (90) that includes a server device (91) having a storage (81) and that includes a controller (70) having a processor (82).

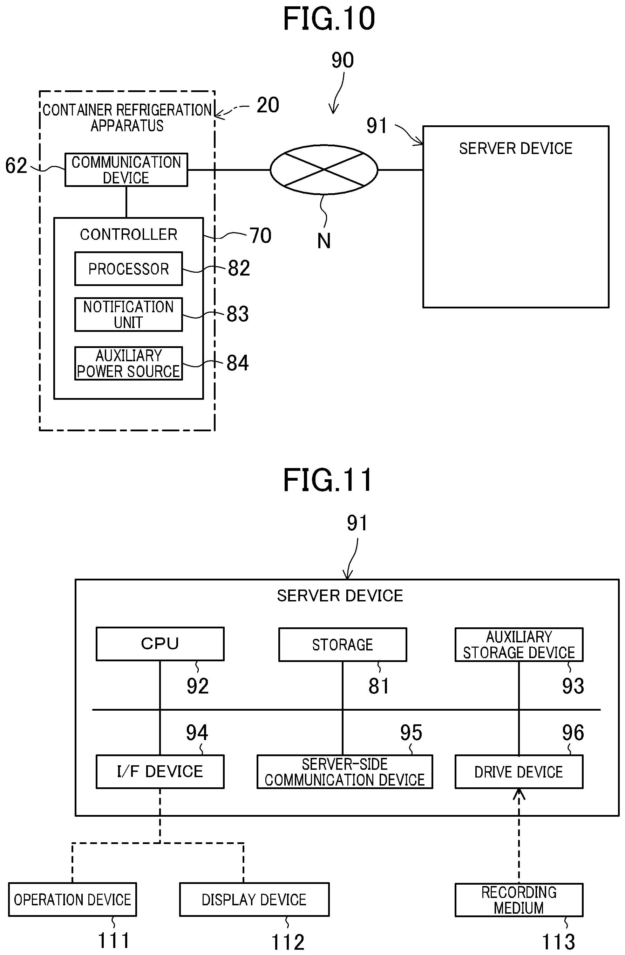

As shown in FIG. 10, the container refrigeration apparatus (20) includes a communication device (62) and the controller (70) as a processing device. The controller (70) includes the processor (82), a notification unit (83), and an auxiliary power source (84). The controller (70) is connected with the server device (91) via the communication device (62) and a network (N).

As shown in FIG. 11, the server device (91) includes, as hardware elements, a central processing unit (CPU) (92), the storage (81), an auxiliary storage device (93), an I/F device (94), a server-side communication device (95), and a drive device (96).

The central processing unit (CPU) (92) is a computing device that executes various programs. The storage (81) is a storage device that stores programs, data, and the like required for the execution by the CPU. The storage (81) includes a hard disk drive (HDD), a random access memory (RAM), a solid state drive (SSD), and the like. The auxiliary storage device (93) is an auxiliary storage device that stores various programs and information used when the programs are executed. The I/F device (94) is a device that is connected with external devices, thereby communicating with and controlling the external devices. In this example, an operation device (111) and a display device (112) are connected to the server device (91) via the I/F device (94). The operation device (111) is an operation device that accepts various operations, and the display device (112) is a display device that displays various pieces of information. The server-side communication device (95) is a communication device that enables communications between the server device (91) and the external devices. The drive device (96) is a device that reads data from a recording medium (113). The recording medium (113) is a CD-ROM, a magneto-optical disk, a ROM, a flash memory, or an SSD, for example.

Similarly to the embodiment, the storage (81) stores the first data for estimating the degree of impact on the target component (T). The server-side communication device (95) is connected with the communication terminal of the person concerned. The server-side communication device (95) is a server-side notification unit that informs the person concerned of the historical data on the server device (91). The historical data includes the detected value detected by the acceleration sensor (65), the time-series data on the estimated value of the degree of impact on each target component (T), and the information indicating that the target component (T) is in an unusual state.

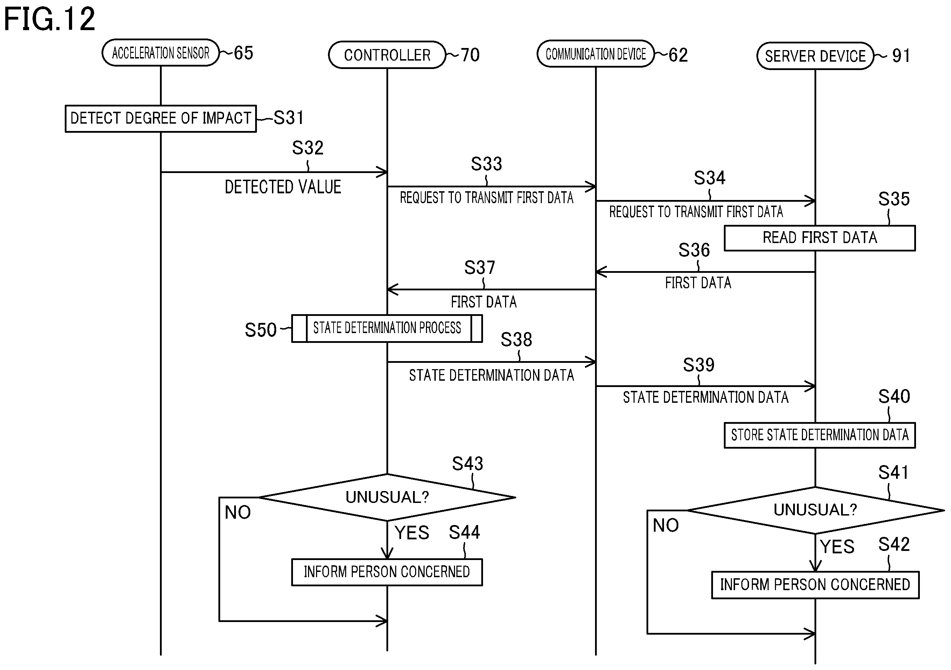

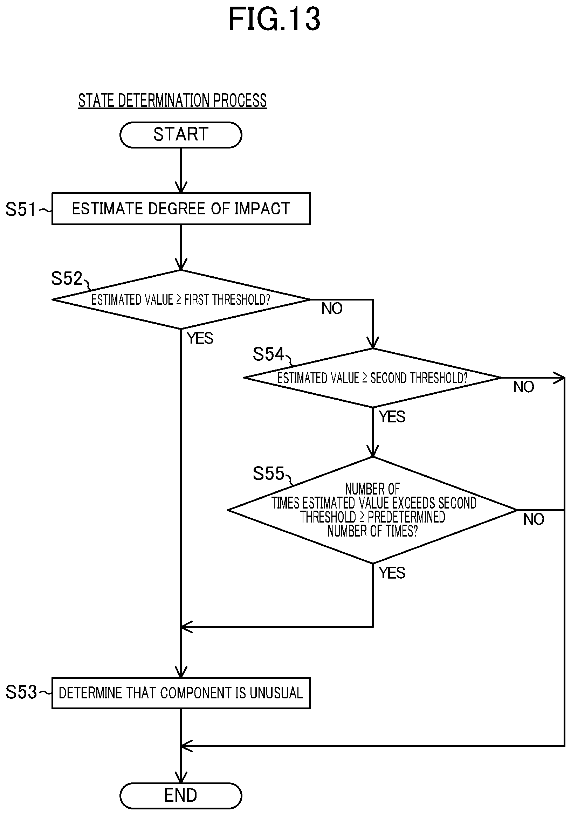

An operation of the determination system (90) will be described in detail with reference to the sequence chart of FIG. 12 and the flowchart of FIG. 13.

In step S31 of FIG. 12, the acceleration sensor (65) detects the acceleration, which is the degree of impact. In step S32, the acceleration sensor (65) transmits the detected value to the controller (70). In step S33, the controller (70) transmits a signal to the communication device (62), where the signal indicates a request to transmit the first data. In step S34, the communication device (62) transmits a signal to the server device (91) via the network (N), where the signal indicates a request to transmit the first data.

In step S35, the server device (91) reads the first data from the storage (81). Similarly to the embodiment, the first data is a data on which the target components (T) are associated with the correction coefficients of those target components (T). In step S36, the server device (91) transmits the first data to the communication device (62) via the network (N). In step S37, the communication device (62) transmits the received first data to the controller (70). In this manner, the server device (91) transmits the first data to the controller (70) via the communication device (62) based on the request for transmission from the controller (70).

In step S50, the processor (82) of the controller (70) conducts the same determination process as the process of the embodiment (hereinafter referred to as the state determination process).

In the state determination process of FIG. 13, in step S51, the processor (82) determines the estimated value of the acceleration of each target component (T) based on the detected value detected by the acceleration sensor (65) in step S31 and the first data stored in the storage (81). In other words, the processor (82) determines the estimated value of the acceleration of each target component (T) based on the detected value detected by the acceleration sensor (65) in step S31 and the first data transmitted from server device (91). Specifically, the processor (82) determines the estimated value by multiplying the detected value of the acceleration by the correction coefficient of each target component (T).

Next, in step S52, the processor (82) compares the estimated value determined in step S51 with the first threshold in order to determine which one is higher (or lower) than the other. In step S52, if the estimated value is higher than or equal to the first threshold, the process goes to step S53. In step S53, the processor (82) determines that the target component (T) as a determination object is in an unusual state.

In step S52, if the estimated value is lower than the first threshold, the process goes to step S54. In step S54, the processor (82) compares the estimated value with the second threshold in order to determine which one is higher (or lower) than the other. If the estimated value is higher than or equal to the second threshold, the process goes to step S55.

In step S55, the processor (82) compares the number of times the estimated value exceeds the second threshold with the predetermined number of times in order to determine which one is higher (or lower) than the other. If the number of times the estimated value exceeds the second threshold is higher than or equal to the predetermined number of times, the process goes to step S53. In step S53, the processor (82) determines that the target component (T) as a determination object is in an unusual state.

As shown in FIG. 12, after the state determination process of step S50, the controller (70) in step S38 transmits the state determination data to the communication device (62). In step S39, the communication device (62) transmits the received state determination data to the server device (91) via the network (N). Here, the state determination data includes the detected value detected by the acceleration sensor (65), the estimation value determined by the processor (82), and the result of determining whether the target component (T) is in an unusual state. In step S40, the storage (81) of the server device (91) stores the state determination data as historical data. Accordingly, the storage (81) of the server device (91) can store, as historical data, the detected value, the estimated value, and the result of determining whether the component is in an unusual state.

If it is determined in step S41 according to the state determination process of step S50 that the target component (T) is in an unusual state, the server-side communication device (95) of the server device (91) informs the target person of the information indicating that the target component (T) is in an unusual state. Specifically, the server-side communication device (95) transmits the data indicating that the component is in an unusual state to the communication terminal of the person concerned. Accordingly, the person concerned can promptly recognize that the target component (T) is in an unusual state, and thus can do something against it.

After the state determination process of step S50, the controller (70) executes the process of step S43. If it is determined in step S43 according to the state determination process that the target component (T) is in an unusual state, the notification unit (83) of the controller (70) in step S44 informs the person concerned of the information indicating that the target component (T) is in an unusual state. Accordingly, the person concerned can promptly recognize that the target component (T) is in an unusual state, and thus can do something against it.

In the seventh variation, if it is determined that the target component (T) is in an unusual state, only one of the notification unit (83) of the controller (70) and the server-side communication device (95) may inform the person concerned that the target component (T) is in an unusual state.

In steps S33 and S34 of the seventh variation, the request to transmit the first data may be submitted at the timing when the acceleration sensor (65) receives the detected value or may be submitted at another predetermined timing. An example of another predetermined timing is when the container (10) is located on land. This is because, when the container (10) is located on land, the person concerned who has been informed can promptly conduct inspection and repair and can select the container (10).

Whether the container (10) is located on land can be confirmed by identifying the positional information according to the GPS sensor; confirming the input operation conducted by the person concerned; or confirming whether the communication terminal of the person concerned can exchange communication with the container (10).

The configuration of the seventh variation can also be applied to any of the first to sixth variations. For example, if the determination system (90) of the seventh variation conducts the determination process of the first variation, the storage (81) of the server device (91) stores the first data and the second data. To the server device (91) via the communication device (62), the controller (70) transmits a request to transmit the first data and the second data stored in the storage (81) to the server device (91). Based on the request for transmission, the server device (91) transmits the first data and the second data stored in the storage (81) to the controller (70) via the communication device (62). Similarly to the process of FIG. 8, the controller (70) determines a fatigue failure of the target component (T) based on the detected value detected by the acceleration sensor (65), the first data, and the second data.

(8) Determination Method and Program

The determination method of the present disclosure includes: a storing step of storing the data on an influence on the detected value of the degree of impact detected by the sensor (65) disposed in the container (10) including the target component (T), where the influence is due to a difference between a position of the sensor (65) and a position of the target component (T); and an estimating step of determining the degree of impact on the target component (T) as an estimated value based on the detected value detected by the sensor (65) and the data stored in the storing step. Here, the determination method may include any of the steps shown in FIGS. 6, 8, 12, and 13.

A program of the present disclosure is configured to allow a computer to execute: a storing step of storing the data on an influence on the detected value of the degree of impact detected by the sensor (65) disposed in the container (10) including the target component (T), where the influence is due to a difference between a position of the sensor (65) and a position of the target component (T); and an estimating step of determining the degree of impact on the target component (T) as an estimated value based on the detected value detected by the sensor (65) and the data stored in the storing step. Here, the program may be configured to allow the computer to execute any of the steps shown in FIGS. 6, 8, 12, and 13. The program may be stored in only one of the controller (70), the communication terminal, the server device, and the storage medium; or may be stored in two or more of them separately.

(9) Reference Embodiment

If the detected value detected by the sensor (65) exceeds the first threshold, the processor (82) of the determination device (80) of the reference embodiment determines that the target component (T) is in an unusual state.

If the number of times the detected value detected by the sensor (65) exceeds the second threshold exceeds a predetermined number of times, the processor (82) of the determination device (80) of the reference embodiment determines that the target component (T) is in an unusual state.

The processor (82) of the determination device (80) of the reference embodiment determines a fatigue failure of the target component (T) as an unusual state based on the detected value detected by the sensor (65). Specifically, the processor (82) determines a fatigue failure of the target component (T) as an unusual state based on the stress amplitude σ determined from the detected value detected by the sensor (65) and applied on the target component (T) and the number of cycles the stress amplitude σ is applied.

Those operations of the determination device (80) of the reference embodiment are the same in detail as the operations of the embodiment and variations.

While the embodiment and variations thereof have been described above, it will be understood that various changes in form and details may be made without departing from the spirit and scope of the claims. The embodiment, the variation thereof, and the other embodiments may be combined and replaced with each other without deteriorating intended functions of the present disclosure.

The expressions of "first," "second," and "third" described above are used to distinguish the terms to which these expressions are given, and do not limit the number and order of the terms.

INDUSTRIAL APPLICABILITY

As described above, the present disclosure is useful for a determination device.

DESCRIPTION OF REFERENCE CHARACTERS

| | |
|---|---|
| 10 | Container |
| 11 | Container Body |
| 20 | Container Refrigeration Apparatus |
| 21 | Casing |
| 22 | Casing Body |
| 40 | Compressor |
| 41 | External Heat Exchanger (Heat Exchanger) |
| 42 | External Fan (Fan) |
| 44 | Internal Heat Exchanger (Heat Exchanger) |
| 45 | Internal Fan (Fan) |
| 51 | Expansion Valve (Valve) |
| 52 | Discharge Pipe (Refrigerant Pipe) |
| 53 | Suction Pipe (Refrigerant Pipe) |
| 55 | Liquid Pipe (Refrigerant Pipe) |
| 57 | Bypass Pipe (Refrigerant Pipe) |
| 58 | First Valve (Valve) |
| 59 | Second Valve (Valve) |
| 60 | Electric Component Box |
| 62 | Communication Device |
| 63 | Control Board |
| 65 | Acceleration Sensor (Sensor) |
| 70 | Controller (Processing Device) |
| 80 | Determination Device |
| 81 | Storage |
| 82 | Processor |
| 83 | Notification Unit |
| 91 | Server Device |
| T | Target Component |

**Claims**

1. A determination device comprising:

   a storage (81) configured to store data on an influence on a detected value of a degree of impact detected by a sensor (65) disposed in a container (10) including a target component (T), where the influence is due to a difference between a position of the sensor (65) and a position of the target component (T); and
a processor (82) configured to determine a degree of impact on the target component (T) as an estimated value based on the detected value detected by the sensor (65) and the data stored in the storage (81).

2. The determination device of claim 1, wherein
if the estimated value exceeds a first threshold, the processor (82) determines that the target component (T) is in an unusual state.

3. The determination device of claim 1 or 2, wherein
if the number of times the estimated value exceeds a second threshold exceeds a predetermined number of times, the processor (82) determines that the target component (T) is in an unusual state.

4. The determination device of any one of claims 1 to 3, wherein

    the storage (81) stores the estimated value, and
    the processor (82) determines whether the target component (T) is in an unusual state based on the estimated value stored in the storage (81).

5. The determination device of claim 4, wherein
the processor (82) determines a fatigue failure of the target component (T) as an unusual state based on the estimated value.

6. The determination device of any one of claims 1 to 5, further comprising:
a notification unit (83) configured to inform a person concerned of historical data on the estimated value.

7. A container refrigeration apparatus comprising:

    the target component (T), the sensor (65), and the determination device (80) of any one of claims 1 to 6, wherein
    the container refrigeration apparatus cools an inside of a container body (11) of the container (10).

8. The container refrigeration apparatus of claim 7, further comprising:

    an electric component box (60) configured to house an electric component (63), wherein
    the sensor (65) is disposed inside the electric component box (60).

9. The container refrigeration apparatus of claim 8, wherein

    the electric component includes a control board (63), and
    the sensor (65) is disposed on the control board (63).

10. The container refrigeration apparatus of claim 7, further comprising:

    a communication device (62) configured to communicate with another device, wherein
    the sensor (65) is provided in the communication device (62).

11. The container refrigeration apparatus of any one of claims 7 to 10, wherein
the target component (T) includes at least one of a casing (21) of the container refrigeration apparatus (20), the electric component box (60), a compressor (40), a heat exchanger (41, 44), a fan (42, 45), a refrigerant pipe (52, 53, 55, 57), a valve (51, 58, 59), or a casing body (11).

12. A container comprising:
the target component (T), the sensor (65), and the determination device (80) of any one of claims 1 to 6.

13. A determination system comprising:

a server device (91) including a storage (81) configured to store data on an influence on a detected value of a degree of impact detected by a sensor (65) disposed in a container (10) including a target component (T), where the influence is due to a difference between a position of the sensor (65) and a position of the target component (T); and

a processing device (70) including a processor (82) configured to determine a degree of impact on the target component (T) as an estimated value based on the detected value detected by the sensor (65) and the data stored in the storage (81).

14. The determination system of claim 13, wherein

 to the server device (91) via a communication device (62), the processing device (70) transmits a request to transmit the data stored in the storage (81) to the server device (91), and

 based on the request for transmission, the server device (91) transmits the data stored in the storage (81) to the processing device (70) via the communication device (62).

15. A determination method comprising:

 a storing step of storing data on an influence on a detected value of a degree of impact detected by a sensor (65) disposed in a container (10) including a target component (T), where the influence is due to a difference between a position of the sensor (65) and a position of the target component (T); and

 an estimating step of determining a degree of impact on the target component (T) as an estimated value based on the detected value detected by the sensor (65) and the data stored in the storing step.

16. A program configured to allow a computer to execute:

 a storing step of storing data on an influence on a detected value of a degree of impact detected by a sensor (65) disposed in a container (10) including a target component (T), where the influence is due to a difference between a position of the sensor (65) and a position of the target component (T); and

 an estimating step of determining a degree of impact on the target component (T) as an estimated value based on the detected value detected by the sensor (65) and the data stored in the storing step.

# FIG.1

FRONT ⟷ BACK

# FIG.2

TOP

BACK

LEFT

FRONT

RIGHT

BOTTOM

# FIG.3

# FIG.4

20

70

CONTROLLER

40 — COMPRESSOR

42 — EXTERNAL FAN

45 — INTERNAL FAN

51 — EXPANSION VALVE

58 — FIRST VALVE

59 — SECOND VALVE

71 — MAIN POWER SOURCE

80

DETERMINATION DEVICE

STORAGE — 81

PROCESSOR — 82

NOTIFICATION UNIT — 83

AUXILIARY POWER SOURCE — 84

# FIG.5

T

| TARGET COMPONENT | ACTUAL VALUE (ACCELERATION [G]) | CORRECTION COEFFICENT |
|---|---|---|
| ELECTRIC COMPONENT BOX | 25 | 1.0 |
| BOTTOM PLATE OF CASING | 45 | 1.8 |
| EXTERNAL HEAT EXCHANGER | 10 | 0.4 |
| COMPRESSOR | ... | ... |
| EXTERNAL FAN | ... | ... |
| VALVE | ... | ... |
| INTERNAL HEAT EXCHANGER | ... | ... |
| INTERNAL FAN | ... | ... |
| REFRIGERANT PIPE | ... | ... |

# FIG.6

```
                    ┌─────────────┐
                    │   START     │
                    └──────┬──────┘
                           │
                           ▼
S11 ──  DETECT DEGREE OF
        IMPACT USING SENSOR

S12 ──  STORE VALUE DETECTED BY SENSOR

S13 ──  ESTIMATE DEGREE OF IMPACT

S14 ──  STORE ESTIMATED VALUE

S15 ──  ESTIMATED VALUE ≥ FIRST THRESHOLD?  ── NO ──┐
          │                                         │
          YES                                       ▼
          │        S16 ── ESTIMATED VALUE ≥ SECOND THRESHOLD? ── NO ──►
          │                       │
          │                       YES
          │                       │
          │        S17 ── NUMBER OF TIMES ESTIMATED VALUE
          │               EXCEEDS SECOND THRESHOLD ≥
          │               PREDETERMINED NUMBER OF TIMES? ── NO ──►
          │                       │
          │                       YES
          ▼◄──────────────────────┘
S18 ──  DETERMINE THAT COMPONENT IS UNUSUAL

S19 ──  INFORM PERSON CONCERNED
                           │
                           ▼
                    ┌─────────────┐
                    │    END      │
                    └─────────────┘
```

# FIG.7

# FIG.8

START

S21~ DETECT DEGREE OF IMPACT USING SENSOR

S22~ STORE VALUE DETECTED BY SENSOR

S23~ ESTIMATE DEGREE OF IMPACT

S24~ STORE ESTIMATED VALUE

S25~ CALCULATE DAMAGE LEVEL D
BASED ON S-N CURVE

S26 DAMAGE LEVEL D ≥ 1?

NO

YES

S27~ DETERMINE THAT COMPONET IS UNUSUAL
(FATIGUE FAILURE)

S28~ INFORM PERSON CONCERNED

END

# FIG.9

TOP

LEFT ← → BACK

FRONT ← → RIGHT

BOTTOM

# FIG.10

CONTAINER REFRIGERATION ~~ 20
APPARATUS

62 — COMMUNICATION DEVICE

90

91 ↙

SERVER DEVICE

N

CONTROLLER ~ 70

PROCESSOR — 82

NOTIFICATION UNIT — 83

AUXILIARY POWER SOURCE — 84

# FIG.11

91

SERVER DEVICE

| CPU | STORAGE | AUXILIARY STORAGE DEVICE |
|---|---|---|
| 92 | 81 | 93 |
| 94 | 95 | 96 |
| I/F DEVICE | SERVER-SIDE COMMUNICATION DEVICE | DRIVE DEVICE |

| OPERATION DEVICE | DISPLAY DEVICE | RECORDING MEDIUM |
|---|---|---|
| 111 | 112 | 113 |

# FIG.12

EP 4 597 012 A1

# FIG.13

STATE DETERMINATION PROCESS

START

S51 — ESTIMATE DEGREE OF IMPACT

S52 — ESTIMATED VALUE ≥ FIRST THRESHOLD?

NO

YES

S54 — ESTIMATED VALUE ≥ SECOND THRESHOLD?

NO

YES

S55 — NUMBER OF TIMES ESTIMATED VALUE EXCEEDS SECOND THRESHOLD ≥ PREDETERMINED NUMBER OF TIMES?

NO

YES

S53 — DETERMINE THAT COMPONENT IS UNUSUAL

END

## INTERNATIONAL SEARCH REPORT

| International application No. |
| --- |
| **PCT/JP2023/044657** |

**A.     CLASSIFICATION OF SUBJECT MATTER**

*F25D 29/00*(2006.01)i; *B65G 61/00*(2006.01)i; *F25D 11/00*(2006.01)i; *G08B 21/18*(2006.01)i
FI:    F25D29/00 Z; B65G61/00 510; F25D11/00 101D; G08B21/18

According to International Patent Classification (IPC) or to both national classification and IPC

**B.     FIELDS SEARCHED**

Minimum documentation searched (classification system followed by classification symbols)

F25D1/00-31/00; B65G61/00; G08B21/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2020/129380 A1 (DAIKIN INDUSTRIES, LTD.) 25 June 2020 (2020-06-25)<br>entire text, all drawings | 1-16 |
| A | JP 2002-115941 A (MATSUSHITA REFRIGERATION COMPANY) 19 April 2002<br>(2002-04-19)<br>entire text, all drawings | 1-16 |
| A | JP 2020-085296 A (TOSHIBA LIFESTYLE PRODUCTS & SERVICES CORP.) 04 June<br>2020 (2020-06-04)<br>entire text, all drawings | 1-16 |
| A | KR 10-2022-0048408 A (S-WINNUS CO., LTD.) 19 April 2022 (2022-04-19)<br>entire text, all drawings | 1-16 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 February 2024** | **05 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/044657**

| Patent document cited in search report | | | Publication date (day/month/year) | Patent family member(s) | | | Publication date (day/month/year) |
|---|---|---|---|---|---|---|---|
| WO | 2020/129380 | A1 | 25 June 2020 | US | 2021/0293460 | A1 | |
| | | | | EP | 3882540 | A1 | |
| | | | | CN | 113167521 | A | |
| | | | | JP | 2020-101327 | A | |
| JP | 2002-115941 | A | 19 April 2002 | (Family: none) | | | |
| JP | 2020-085296 | A | 04 June 2020 | WO | 2020/105214 | A1 | |
| | | | | CN | 113015878 | A | |
| KR | 10-2022-0048408 | A | 19 April 2022 | WO | 2022/080633 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020101327 A